# EUROPEAN PATENT APPLICATION

(11) **EP 2 312 276 A1**
(43) Date of publication of application: **20.04.2011**
(21) Application number: 08800638.2
(22) Date of filing: 24.09.2008
(51) Int. Cl.: G01F 1/32

(54) **A COMPOSITE GAS FLUID FLOW MEASURING METHOD AND ITS DEVICE**

(30) Priority: 17.07.2008 CN 200810120056
(71) Applicant: Memsic Semiconductor (Wuxi) Co., Ltd., Jiangsu 214028 (CN)
(72) Inventor: HAN, Huaicheng, Jiangsu 214028 (CN); MAO, Julin, Jiangsu 214028 (CN)
(74) Representative: Jordan, Volker Otto Wilhelm
(86) International application number: PCT/CN2008/001645
(87) International publication number: WO 2010/006474

(57) **Abstract**

A composite method for measuring gas fluid flow, comprising the steps of: (a) providing a bypass pipe astride to a mechanical device for measuring gas fluid flow with a temperature sensor and a pressure sensor, (b) providing an MEMS flowrate sensor on the bypass pipe, (c) connecting the temperature sensor, the pressure sensor, the mechanical device for measuring gas fluid flow and the MEMS flowrate sensor to a data processing system, and (d) linking the data processing system with a data display system, wherein the measured data from the temperature sensor, the pressure sensor, the mechanical device for measuring gas fluid flow and the MEMS flowrate sensor is processed by the data processing system and gas fluid flow data is displayed by the data display system.

## Description

### FIELD OF THE INVENTION

The present invention relates to the field of gas fluid flow measurement, and more particularly to a composite gas fluid flow measuring method and device with a wide measurement range, high measurement accuracy and superior reliability.

### BACKGROUND OF THE INVENTION

It is well known that currently, many methods may be used for measuring gas fluid flow, and corresponding test devices are also diverse. However, each type of these devices has its own limitations. For example, a mechanical device for measuring gas fluid flow has a stable performance and high measurement accuracy when the gas fluid flow is large, but introduces a large error when the gas fluid flow is small, for example, a vortex street device for measuring gas fluid flow can hardly perform accurate measurement when the gas fluid flow is smaller than 5 m/s; while a thermal device for measuring gas fluid flow is suitable for measurement of a small gas fluid flow, but introduces a large error when the gas fluid flow is large. Therefore, it is difficult for a single device for measuring gas fluid flow to achieve a wide-range and high-accuracy measurement. Chinese Patent Publication No. CN1282417 filed on January 31, 2001 discloses a flowmeter capable of measuring an accurate flowrate over a wide flowrate range. A measurement range for a small flowrate and a measurement range for a large flowrate are determined inside a flow path of a piping. Distributing strainers for distributing the flow of a gas are disposed inside the measurement range for a small flowrate by dividing the flow path into a plurality of small flow paths. A mean flowrate of the gas flowing through each of a plurality of small flow paths becomes substantially equal. A part of the gas reaches nozzles erected across flowrate sensors for a small flowrate and is accelerated by the operation of these nozzles. The flowrate sensors for a small flowrate inside the measurement range for a small flowrate output signals corresponding to the flowrate of the gas passed through the small flow path and accelerated by the nozzles in the small flowrate range. Flowrate sensors for a large flowrate inside the measurement range for a large flowrate output signals corresponding to the flowrate of the gas in the large flowrate range. Although the above device expands the measurement range and improves the measurement accuracy to a certain degree, the device has a complex structure and high manufacturing cost, and meanwhile, it is also difficult to eliminate the influence of flow pattern variation in practical applications of the device.

### SUMMARY OF THE INVENTION

Accordingly, the present invention is directed to a composite method and device for measuring gas fluid flow with a wide measurement range and high applicability, so as to solve the problem of narrow measurement range and low applicability of the conventional device for measuring gas fluid flow.

The present invention is also directed to a composite method and device for measuring gas fluid flow with high measurement accuracy and superior reliability, so as to solve the problem of low measurement accuracy and poor reliability of the conventional device for measuring gas fluid flow.

To achieve the above technical objectives, the present invention adopts the following technical solutions. A composite method for measuring gas fluid flow includes providing a bypass pipe astride a mechanical device for measuring gas fluid flow with a temperature sensor and a pressure sensor, in which an MEMS flowrate sensor is provided on the bypass pipe, the temperature sensor, the pressure sensor, the mechanical device for measuring gas fluid flow and the MEMS flowrate sensor are all connected to a data processing system linked with a data display system, measured data from the temperature sensor, the pressure sensor, the mechanical device for measuring gas fluid flow and the MEMS flowrate sensor is processed by the data processing system and gas fluid flow data is displayed by the data display system. A bypass pipe is provided astride a mechanical device for measuring gas fluid flow, an MEMS flowrate sensor is provided on the bypass pipe, measured data from the two flowrate measurement devices is processed by a data processing system, and finally gas fluid flow data is displayed by a data display system, so that through the combination of the mechanical device for measuring gas fluid flow that has high stability and accuracy for a large flowrate with the MEMS flowrate sensor that is distinctly advantageous in measurement of a small flowrate, not only the measurement range and the applicability of the device for measuring gas fluid flow are effectively expanded, but also the measured data from the two measurement devices is considered in the data processing process of the data processing system, thereby improving the measurement accuracy of the gas fluid flow. Moreover, as the two measurement devices operate at the same time, the reliability of the entire device for measuring gas fluid flow is greatly improved.

As a preferred method, in the composite method for measuring gas fluid flow, the data processing system comprehensively analyzes the measured data from the mechanical device for measuring gas fluid flow after temperature and pressure compensations and the data from the MEMS flowrate sensor, uses the data from the MEMS flowrate sensor when the gas fluid flow is small, uses the data from the mechanical device for measuring gas fluid flow when the gas fluid flow is large, and proportionally weights and sums the data from the mechanical device for measuring gas fluid flow and the MEMS flowrate sensor according to the gas fluid flow in an overlapping portion of measurement ranges of the mechanical device for measuring gas fluid flow and the MEMS flowrate sensor. Through such processing, large errors introduced by the MEMS flowrate sensor when the flowrate is large and introduced by the mechanical device for measuring gas fluid flow when the flowrate is small are compensated to a certain degree, thereby improving the measurement accuracy of the gas fluid flow.

As another preferred method, when the mechanical device for measuring gas fluid flow has no measured data, the data processing system uses the data from the MEMS flowrate sensor, and when the MEMS flowrate sensor has no measured data, the data processing system uses the data from the mechanical device for measuring gas fluid flow. When one measured data is absent, the data processing system uses the alternative measured data. Such a data processing method is performed according to real-time measured data, so that the data processing system has a simple program structure.

As another optional method, when the mechanical device for measuring gas fluid flow or the MEMS flowrate sensor has no measured data, the data processing system determines final gas fluid flow data according to the remaining measured data and based on a preset weighting curve. Such a data processing method is performed according to real-time measured data in combination with data of the preset weighting curve, and the data processing system needs to store the data of the preset weighting curve, which leads to a relatively complex program structure.

A composite device for measuring gas fluid flow includes a bypass pipe astride a mechanical device for measuring gas fluid flow with a temperature sensor and a pressure sensor, in which an MEMS flowrate sensor is provided on the bypass pipe, and the temperature sensor, the pressure sensor, the mechanical device for measuring gas fluid flow and the MEMS flowrate sensor are all connected to a data processing system linked with a data display system. A bypass pipe is provided astride a conventional mechanical device for measuring gas fluid flow, an MEMS flowrate sensor is provided on the bypass pipe, the two flowrate measurement devices are used to measure the gas fluid flow at the same time, measured data is collectively processed by a data processing system according to the advantages of the two flowrate measurement devices in measurement under different flowrate conditions, and finally the measured data is displayed by a data display system. In such a mechanism for measuring gas fluid flow, through the ingenious combination of the mechanical device for measuring gas fluid flow that has high stability and accuracy for a large flowrate with the MEMS flowrate sensor that is distinctly advantageous in measurement of a small flowrate, not only the measurement range of the device for measuring gas fluid flow is effectively expanded, but also the measured data from the two measurement devices is considered in the data processing process of the data processing system, thereby improving the measurement accuracy of the gas fluid flow. Moreover, as the two measurement devices operate at the same time, the reliability of the entire device for measuring gas fluid flow is greatly improved.

An inlet of the bypass pipe is located in a gas flow upstream of the mechanical device for measuring gas fluid flow, an outlet of the bypass pipe is located in a gas flow downstream of the mechanical device for measuring gas fluid flow, and preferably, the bypass pipe has an inner diameter of 2 to 10 mm. Since the bypass pipe performs gas fluid flow measurement by using a pressure difference between gas inlet and outlet of a main pipe, the inlet of the bypass pipe is located in the gas flow upstream of the mechanical device for measuring gas fluid flow, and the outlet of the bypass pipe is located in the gas flow downstream of the mechanical device for measuring gas fluid flow. For a large-diameter main pipe, a bypass pipe with a large inner diameter may be used, and for a small-diameter main pipe, a bypass pipe with a small inner diameter should be used, so that the cross-sectional area of the bypass pipe is far less than that of the main pipe, and thus the bypass pipe hardly influences the mechanical device for measuring gas fluid flow on the main pipe.

Preferably, total pressure taps of an averaging pitot tube are provided in a gas flow upstream of the mechanical device for measuring gas fluid flow, an outlet end of the averaging pitot tube is connected to an inlet of the bypass pipe, and an outlet of the bypass pipe is located in a gas flow downstream of the mechanical device for measuring gas fluid flow. The averaging pitot tube measurement manner is advantageous in that a mean flowrate through a section of the tube can be measured without being influenced by distortion of the flow pattern, thereby improving the measurement accuracy, and meanwhile the direct impact and contamination of impurities in a fluid in the measurement tube on the MEMS flowrate sensor can be reduced, thereby prolonging the service life of the MEMS flowrate sensor.

Preferably, the mechanical device for measuring gas fluid flow is a velocity or differential pressure device for measuring gas volumetric flow rate. The composite measurement manner of providing the bypass pipe and providing the MEMS flowrate sensor on the bypass pipe adopted by the composite device for measuring gas fluid flow is applicable to all mechanical devices for measuring gas fluid flow having a pressure difference between gas inlet and gas outlet sides.

The present invention has the following beneficial effects. The present invention not only effectively solves the problem of narrow measurement range and low applicability of the conventional device for measuring gas fluid flow, but also solves the problem of low measurement accuracy and poor reliability of the conventional device for measuring gas fluid flow. The present invention has a simple structure and low cost, and is worthwhile being promoted in relevant industries.

### BRIEF DESCRIPTION OF THE DRAWINGS

The present invention will become more fully understood from the detailed description given herein below for illustration only, and thus are not limitative of the present invention, and wherein:
FIG. 1 is a schematic structural view of a composite device for measuring gas fluid flow according to one embodiment of the present invention; and
FIG. 2 is another schematic structural view of a composite device for measuring gas fluid flow according to another embodiment of the present invention.

### DETAILED DESCRIPTION OF THE INVENTION

The detailed implementation of the technical solutions of the present invention is further described below through embodiments with reference to the accompanying drawings.

### Preferred Embodiment 1

A composite method for measuring gas fluid flow of a preferred Embodiment includes providing a bypass pipe astride a mechanical device for measuring gas fluid flow with a temperature sensor and a pressure sensor, in which an MEMS flowrate sensor is provided on the bypass pipe, wherein the temperature sensor, the pressure sensor, the mechanical device for measuring gas fluid flow and the MEMS flowrate sensor are all connected to a data processing system linked to a data display system, and the measured data from the temperature sensor, the pressure sensor, the mechanical device for measuring gas fluid flow and the MEMS flowrate sensor is processed by the data processing system and gas fluid flow data is displayed by the data display system. The data processing system collectively analyzes the measured data from the mechanical device for measuring gas fluid flow after temperature and pressure compensation and the data from the MEMS flowrate sensor, uses the data from the MEMS flowrate sensor when the gas fluid flow is small, uses the data from the mechanical device for measuring gas fluid flow when the gas fluid flow is large, and proportionally weights and sums the data from the mechanical device for measuring gas fluid flow and the MEMS flowrate sensor according to the gas fluid flow in an overlapping portion of measurement ranges of the mechanical device for measuring gas fluid flow and the MEMS flowrate sensor. When the mechanical device for measuring gas fluid flow has no measured data, the data processing system uses the data from the MEMS flowrate sensor, and when the MEMS flowrate sensor has no measured data, the data processing system uses the data from the mechanical device for measuring gas fluid flow.

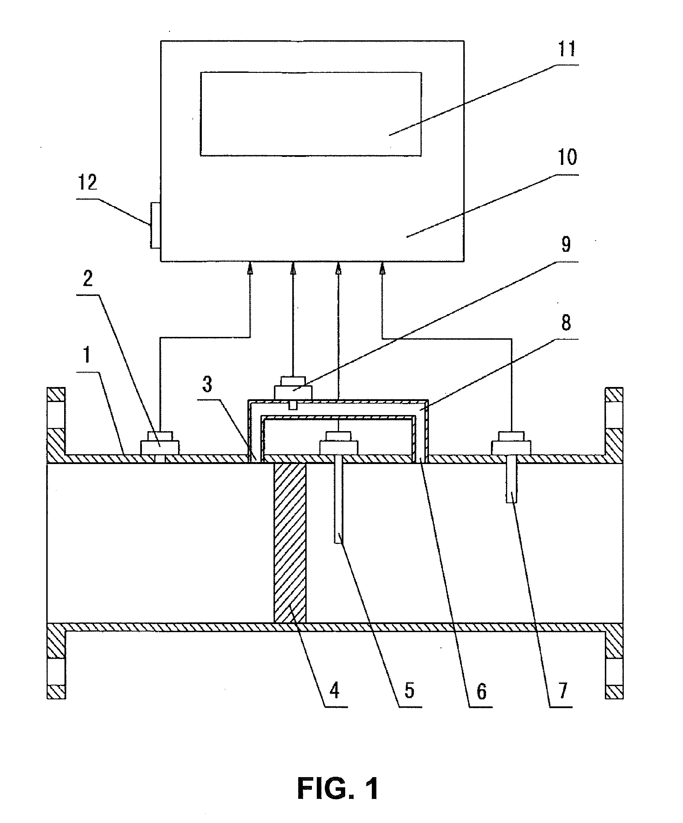

The composite device for measuring gas fluid flow of the preferred Embodiment 1 is shown in FIG. 1. The composite device for measuring gas fluid flow includes a bypass pipe 8 astride a vortex street device for measuring gas fluid flow with a temperature sensor 7 and a pressure sensor 2 on a meter body 1. An inlet 3 of the bypass pipe 8 is located in a gas flow upstream of a vortex generator 4, an outlet 6 of the bypass pipe is located in a gas flow downstream of a vortex street frequency detector 5, the bypass pipe 8 has an inner diameter of 5 mm, and an MEMS flowrate sensor 9 is provided on the bypass pipe 8. The temperature sensor 7, the pressure sensor 2, the vortex street frequency detector 5 and the MEMS flowrate sensor 9 on the vortex street device for measuring gas fluid flow are all connected to a data processing system 10 linked with a data display system 11. The data processing system 10 is further provided with an input output interface 12. The entire composite device for measuring gas fluid flow is powered by a dedicated power supply.

### Preferred Embodiment 2

A preferred Embodiment 2 adopts such a measurement method that when the mechanical device for measuring gas fluid flow or the MEMS flowrate sensor has no measured data, the data processing system determines final gas fluid flow data according to the remaining measured data and based on a preset weighting curve, and the other methods are the same as Embodiment 1.

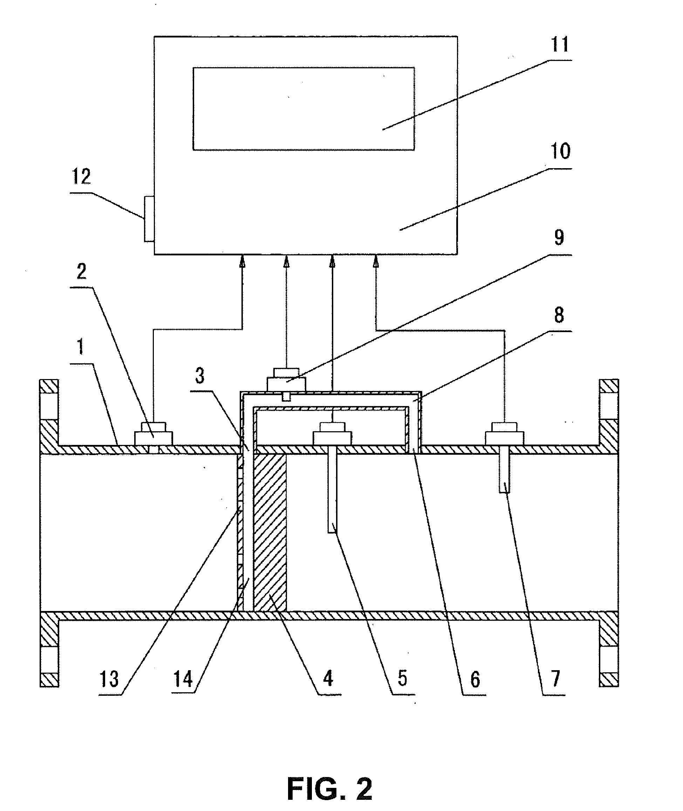

A composite device for measuring gas fluid flow of preferred Embodiment 2 is shown in FIG. 2. The composite device for measuring gas fluid flow includes a bypass pipe 8 astride a vortex street device for measuring gas fluid flow with a temperature sensor 7 and a pressure sensor 2 on a meter body 1. An averaging pitot tube 14 and pressure taps 13 are disposed on a vortex generator 4 according to position requirements of total pressure taps of an averaging pitot tube, an outlet end of the averaging pitot tube 14 is connected to an inlet 3 of the bypass pipe 8, and an outlet 6 of the bypass pipe 8 is located in a gas flow downstream of a vortex street frequency detector 5. The rest is the same as the Preferred Embodiment 1.

When the composite device for measuring gas fluid flow is used, most of the measured gas flows through the mechanical device for measuring gas fluid flow of the main pipe, and a small quantity of the gas flows through the bypass pipe under the action of a pressure different between two ends of the gas measurement device of the main pipe. The measured flowrate data from the gas measurement device of the main pipe is converted into volume data under standard conditions by the data processing system through temperature and pressure compensation according to synchronously measured pressure and temperature data of the main pipe. The small quantity of the gas flowing through the bypass pipe is subjected to another gas fluid flow measurement by the MEMS flowrate sensor. The measured data from the MEMS flowrate sensor may be directly labeled as volume data under standard conditions. As such, the two gas fluid flow measurements both achieve standard volume measurement, so that organic combination of the two measurement manners is achieved. The data processing system comprehensively analyzes the measured data from the two measurement devices according to the advantages of the two measurement devices in measurement under different flowrate conditions, and the final gas fluid flow data is displayed by the data display system. Thus, flowrate measurement under standard conditions with a wide measurement range, high accuracy and good reliability is achieved, which follows the development trend of gas fluid flow and mass measurement.

## Claims

1. A composite method for measuring gas fluid flow, comprising the steps of:
a. providing a bypass pipe astride to a mechanical device for measuring gas fluid flow with a temperature sensor and a pressure sensor,
b. providing an MEMS flowrate sensor on the bypass pipe,
c. connecting the temperature sensor, the pressure sensor, the mechanical device for measuring gas fluid flow and the MEMS flowrate sensor to a data processing system
d. linking the data processing system with a data display system, wherein the measured data from the temperature sensor, the pressure sensor, the mechanical device for measuring gas fluid flow and the MEMS flowrate sensor is processed by the data processing system and gas fluid flow data is displayed by the data display system.

2. The composite method for measuring gas fluid flow of claim 1, wherein the data processing system collectively analyzes the measured data from the mechanical device for measuring gas fluid flow after temperature and pressure compensation and the data from the MEMS flowrate sensor, uses the data from the MEMS flowrate sensor when the gas fluid flow is small, uses the data from the mechanical device for measuring gas fluid flow when the gas fluid flow is large, and proportionally weights and sums the data from the mechanical device for measuring gas fluid flow and the MEMS flowrate sensor according to the gas fluid flow in an overlapping portion of measurement ranges of the mechanical device for measuring gas fluid flow and the MEMS flowrate sensor.

3. The composite method for measuring gas fluid flow of claim 1, wherein when the mechanical device for measuring gas fluid flow has no measured data, the data processing system uses the data from the MEMS flowrate sensor, and when the MEMS flowrate sensor has no measured data, the data processing system uses the data from the mechanical device for measuring gas fluid flow.

4. The composite method for measuring gas fluid flow of claim 1, wherein when no data is received from the mechanical device for measuring gas fluid flow or the MEMS flowrate sensor, the data processing system determines final gas fluid flow data according to a remaining measured data and based on a pre-determined weighting curve.

5. A composite device for measuring gas fluid flow, comprising:
a. a bypass pipe astride on a mechanical device for measuring gas fluid flow having a temperature sensor and a pressure sensor,
b. an MEMS flowrate sensor is provided on the bypass pipe,
c. a data processing system connected to the temperature sensor, the pressure sensor, the mechanical device for measuring gas fluid flow and the MEMS flowrate sensor; and
d. a data display system connected to the data processing system.

6. The composite device for measuring gas fluid flow of claim 5, wherein the composite device for measuring gas fluid flow further comprises:
a. an inlet of the bypass pipe located in a gas flow upstream of the mechanical device for measuring gas fluid flow,
b. an outlet of the bypass pipe located in a gas flow downstream of the mechanical device for measuring gas fluid flow, and
c. the bypass pipe having an inner diameter of 2 to 10 mm.

7. The composite device for measuring gas fluid flow of claim 6, wherein total pressure taps of an averaging pitot tube are provided in a gas flow upstream of the mechanical device for measuring gas fluid flow, an outlet end of the averaging pitot tube is connected to an inlet of the bypass pipe, and an outlet of the bypass pipe is located in a gas flow downstream of the mechanical device for measuring gas fluid flow.

8. The composite device for measuring gas fluid flow of claim 7, wherein the mechanical device for measuring gas fluid flow is a velocity or differential pressure device for measuring gas volumetric flow rate.
